(19) Europäisches Patentamt / European Patent Office / Office européen des brevets

(11) **EP 3 634 771 B1**

(12) **FASCICULE DE BREVET EUROPEEN**

(45) Date de publication et mention de la délivrance du brevet:
**04.08.2021 Bulletin 2021/31**

(21) Numéro de dépôt: **18734436.1**

(22) Date de dépôt: **05.06.2018**

(51) Int Cl.:
**B42D 25/328** (2014.01)   **B42D 25/324** (2014.01)
**B42D 25/373** (2014.01)   **G02B 5/18** (2006.01)

(86) Numéro de dépôt international:
**PCT/EP2018/064802**

(87) Numéro de publication internationale:
**WO 2018/224513 (13.12.2018 Gazette 2018/50)**

(54) **COMPOSANT OPTIQUE DE SECURITE VISIBLE EN REFLEXION, FABRICATION D'UN TEL COMPOSANT**

OPTISCHE, BEI REFLEKTION SICHTBARE SICHERHEITSKOMPONENTE, HERSTELLUNG SOLCH EINER KOMPONENTE

OPTICAL SECURITY COMPONENT VISIBLE IN REFLECTION, MANUFACTURE OF SUCH A COMPONENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.06.2017 FR 1755002**

(43) Date de publication de la demande:
**15.04.2020 Bulletin 2020/16**

(73) Titulaire: **SURYS**
**77600 Bussy-Saint-Georges (FR)**

(72) Inventeurs:
• **PETITON, Valéry**
**77440 Vendrest (FR)**
• **CHIKHA, Khalil**
**63400 Chamalieres (FR)**
• **PIGEON, Yoran Eli**
**29200 Brest (FR)**
• **TOLLET, Vincent**
**77580 Bouleurs (FR)**
• **DANIEL, Françoise**
**77420 Champs sur Marne (FR)**

(74) Mandataire: **Osha Liang**
**2, rue de la Paix**
**75002 Paris (FR)**

(56) Documents cités:
WO-A1-2015/154943    WO-A1-2016/177470
DE-A1-102012 020 550

EP 3 634 771 B1

## Description

### DOMAINE TECHNIQUE

La présente description concerne le domaine du marquage de sécurité. Plus particulièrement, elle se rapporte à un composant optique de sécurité visible en réflexion pour vérifier l'authenticité d'un document, à un procédé de fabrication d'un tel composant et à un procédé d'authentification d'un tel composant optique de sécurité.

### ETAT DE L'ART

On connaît de nombreuses technologies pour l'authentification de documents ou de produits, et notamment pour la sécurisation de documents tels que des documents de valeur de type billets de banque, des passeports ou autres documents d'identification. Ces technologies visent à la production de composants optiques de sécurité dont les effets optiques en fonction des paramètres d'observation (orientation du composant par rapport à l'axe d'observation, position et dimensions de la source lumineuse, etc.) prennent des configurations très caractéristiques et vérifiables. Le but général de ces composants optiques est de fournir des effets optiques nouveaux et différenciés, à partir de configurations physiques difficilement reproductibles. Parmi ces composants, on appelle DOVID pour "Diffractive Optical Variable Image Device", les composants optiques produisant des images diffractives et variables que l'on appelle communément les hologrammes.

Il est connu par exemple de générer un effet consistant en une variation dynamique d'un effet optique, par exemple sous forme de déplacement dans une direction donnée d'une zone lumineuse et/ou colorée, parfois appelée « barre déroulante » ou « rolling bar » selon l'expression anglo-saxonne, le déplacement résultant d'une variation de l'angle de tilt de composant. Un observateur peut alors observer une zone lumineuse et/ou colorée qui se déplace le long d'une image lorsqu'il fait tourner le composant, ce qui constitue un contrôle d'authentification supplémentaire.

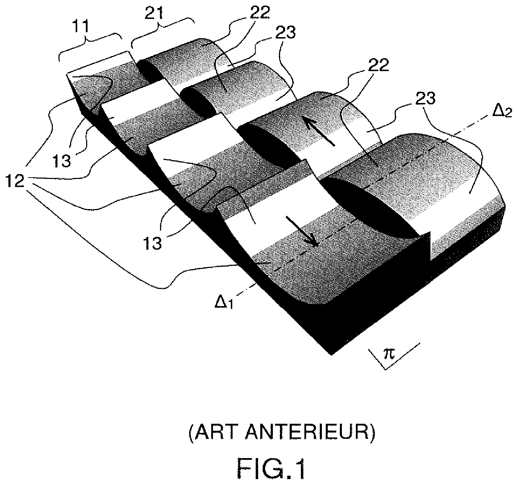

De tels effets optiques dynamiques présentant des « barres déroulantes » sont par exemple décrits dans la demande de brevet WO 2015154943 au nom de la déposante et dont une figure est reproduite dans la présente demande (FIG. 1). Un composant optique de sécurité décrit dans la demande précédemment citée présente un effet visible en réflexion. Le composant optique de sécurité comprend une structure diffractive gravée sur une couche d'un matériau diélectrique. La structure présente un premier motif comprenant un bas-relief avec un premier ensemble de facettes dont les formes sont déterminées pour simuler une série d'éléments optiques cylindriques concaves ou convexe, visibles en réflexion, ce premier motif étant modulé par un deuxième motif formant un réseau sub longueur d'onde. Comme cela apparait sur l'exemple illustré sur la FIG. 1, dans une première région référencée 11, le premier motif permet de simuler une série d'éléments cylindriques concaves 12 et dans une deuxième région référencée 21, le premier motif permet de simuler une série d'éléments cylindriques convexes 22. Par ailleurs, dans chacune des régions 11 et 21, le premier motif est modulé par un second motif pour former respectivement un premier réseau sub longueur d'onde et un deuxième réseau sub longueur d'onde agissant, après dépôt d'une couche mince en matériau diélectrique haut indice par exemple, et encapsulation de la structure, comme respectivement des premier et deuxième filtres soustractifs en longueurs d'onde. Les éléments cylindriques 12, 22 ont des dimensions par exemple d'environ 2 mm de large et 12 mm de long, ce qui les rend visibles à l'œil nu. Un tel composant optique de sécurité présente ainsi un effet visuel dynamique de bandes lumineuses 13, 23, de couleurs différentes et défilantes dans des directions opposées lorsqu'il subit une rotation en tilt autour d'un axe parallèle à l'une des directions principales Δ1, Δ2 des éléments cylindriques.

Cependant, dans l'art antérieur connu, seuls des effets dynamiques de type barres déroulantes ont été décrits. La présente demande décrit un composant optique de sécurité avec une structure originale permettant d'accéder à des effets visuels dynamiques plus complexes, permettant de simuler des messages différenciés, donc plus facile à reconnaître, et au final assurant une authentification encore plus robuste.

### RESUME

Selon un premier aspect, l'invention concerne un composant optique de sécurité destiné à être observé en réflexion, à l'œil nu, selon au moins une première face d'observation, et comprenant une première couche en matériau diélectrique, présentant un premier indice de réfraction et au moins une première structure diffractive gravée sur ladite première couche, ainsi qu' une deuxième couche, recouvrant au moins en partie ladite première structure, et présentant une bande spectrale de réflexion dans le visible.

Dans un composant optique de sécurité selon le premier aspect, ladite première structure diffractive est formée d'un premier motif lui-même formé d'un ensemble de modules disposés côte à côte, selon une direction d'agencement donnée, une largeur maximale de chaque module définie dans la direction d'agencement étant inférieure à 300 $\mu$m, ledit ensemble de modules comprenant un nombre minimal de modules tel qu'une dimension minimale de la première structure selon la direction d'agencement (X) est supérieure à 1 mm. Chaque module comprend un bas-relief avec un premier ensemble de facettes dont les formes sont déterminées pour simuler un élément optique visible en réflexion, avec au moins une région convexe ou concave, ledit élément optique présentant un profil avec une pente continûment variable selon une seule direction, dite direction de variation de la pente, perpendiculaire à la direction d'agencement.

Par ailleurs, ledit premier motif est modulé par un deuxième motif formant un réseau périodique de période comprise entre 100 nm et 700 nm à une ou 2 dimensions, avantageusement comprise entre 200 nm et 500 nm, déterminé pour produire, après dépôt de la deuxième couche, un filtre résonant dans une bande spectrale de résonance donnée, de telle sorte que pour deux modules disposés côte à côte, la bande spectrale de résonance est différente entre lesdits deux modules.

La première couche en matériau diélectrique est au moins partiellement transparente dans la bande spectrale d'observation du composant, c'est-à-dire dans le visible pour une observation à l'œil nu. Une couche « au moins partiellement transparente » est définie comme une couche présentant une transmission d'au moins 70%, de préférence au moins 80% pour une longueur d'onde comprise dans la bande spectrale d'observation.

Un tel composant optique de sécurité présente, en réflexion et sous l'effet d'un mouvement de tilt autour d'un axe parallèle à ladite direction d'agencement, un effet visuel coloré dynamique, fonction de l'agencement desdits modules. L'agencement modulaire du premier motif permet notamment de générer des couleurs originales résultant de combinaisons additives des propriétés de chaque module, couleurs originales que l'on ne pouvait pas toujours percevoir dans les composants optiques de sécurité de l'art antérieur. Cet effet visuel coloré dynamique offre, par rapport à des barres déroulantes horizontales simples, une authentification plus sûre et une barrière technologique plus forte, du fait de la conception et de la fabrication des modules nécessaires pour obtenir l'effet visuel décrit ci-dessus.

Par ailleurs, un tel composant optique de sécurité rend possible une authentification du composant optique de sécurité par polarisation en plus d'une authentification à l'œil nu. En effet, les filtres résonants ainsi obtenus sont sensibles à la polarisation. En éclairant le composant optique de sécurité avec une lumière polarisée, ou en observant à travers un polariseur, on pourra observer une extinction de la couleur.

Par mouvement de tilt, on entend une rotation du composant autour d'un axe parallèle à la direction d'agencement des modules. L'angle de tilt est couramment de +/- 45°, de préférence +/- 30° autour d'une position nominale d'observation. La position nominale d'observation est définie par exemple pour une observation sous éclairage vertical, par un composant incliné de telle sorte à présenter un angle de 45° entre la normale au composant et la direction verticale.

Ladite deuxième couche est par exemple une couche métallique ou une couche dite de variation d'indice, présentant un indice de réfraction différent de celui des couches avoisinantes, de préférence telle que la différence des valeurs d'indice de réfraction soit au moins égale à 0,3.

Selon un ou plusieurs exemples de réalisation, le composant optique de sécurité comprend en outre une troisième couche en matériau diélectrique déposée sur ladite deuxième couche et présentant un troisième indice de réfraction. La deuxième couche est une couche mince en matériau diélectrique, présentant un deuxième indice de réfraction tel que la différence entre le deuxième indice de réfaction et le premier indice de réfraction et la différence entre le deuxième indice de réfaction et le troisième indice de réfraction soit au moins égale à 0,3. Le deuxième motif est adapté pour produire, après dépôt de la deuxième couche et encapsulation de ladite première structure par la troisième couche, un filtre résonant passe bande en réflexion.

Selon un ou plusieurs exemples de réalisation, la deuxième couche est une couche mince en matériau métallique, d'épaisseur supérieure à 40 nm et le deuxième motif est adapté pour produire un filtre résonant coupe-bande en réflexion.

Selon un ou plusieurs exemples de réalisation, ledit premier motif est modulé par ledit deuxième motif de telle sorte que la bande spectrale de résonance est différente sur deux régions d'au moins un premier module. Il est ainsi possible de renforcer la barrière technologique d'accès à un contrôle visuel de premier niveau (à l'œil nu).

Une largeur maximale des modules inférieure à 300 $\mu$m permet que chacun des modules ne puisse être distingué à l'œil nu, ce qui permet de donner à un observateur un effet visuel de lignes continues, droites ou courbes. Un observateur perçoit ainsi soit des segments de droite soit des courbes composées de petits segments de droites juxtaposés. Un nombre minimal de modules est déterminé par la largeur maximale des modules, de telle sorte à ce que la première structure soit visible à l'œil nu. Ainsi, une dimension minimale de la première structure est supérieure à 1 mm, de préférence supérieure à 2 mm, de préférence supérieure à 5 mm.

Selon un ou plusieurs exemples de réalisation, les hauteurs des facettes formant le premier motif sont déterminées pour favoriser une pluralité d'ordres de diffraction à un même angle d'observation afin d'obtenir une diffraction polychromatique ; autrement dit, une diffraction à plusieurs longueurs d'onde issues ou non du même ordre de diffraction et à un angle d'observation sensiblement identique, c'est-à-dire dans une plage angulaire plus petite que 2°, de préférence plus petite que 1°. La pluralité des ordres de diffraction permet de générer pour l'œil de l'observateur, par synthèse additive, un effet « blanc » ou « achromatique ».

Selon un ou plusieurs exemples de réalisation, lesdits modules de l'ensemble de modules ont chacun une largeur sensiblement constante selon ladite direction de variation de la pente. La largeur peut être la même pour tous les modules ou au moins deux desdits modules peuvent présenter une largeur différente. Avoir des modules de largeurs différentes permet de créer des éléments graphiques en mouvement qui présentent, en réflexion, des intensités lumineuses différentes.

Selon un ou plusieurs exemples de réalisation, au moins un desdits modules présente une largeur variable selon ladite direction de variation de la pente. Ledit module peut présenter par exemple une forme triangulaire, pyramidale, ou toute autre forme non rectangulaire, ce qui permet de créer des effets visuels de fondus enchaînés par exemple entre 2 modules de forme pyramidale inversées, ou de créer un niveau d'authentification additionnel du composant, au moyen d'une observation des modules sous microscope.

Selon un ou plusieurs exemples de réalisation, des modules sont de surcroît juxtaposés selon la direction perpendiculaire à la direction d'agencement. Par exemple, un ensemble de modules est dupliqué un nombre donné de fois dans la direction perpendiculaire à la direction d'agencement, ce qui permet de dupliquer les effets visuels. Il est également possible de juxtaposer des modules différents pour construire des effets visuels plus complexes.

Selon un ou plusieurs exemples de réalisation, pour deux modules disposés côte à côte, la pente selon au moins une ligne parallèle à la direction d'agencement est différente entre lesdits deux modules.

Un tel composant optique de sécurité présente, en réflexion et sous l'effet d'un mouvement de tilt autour d'un axe parallèle à ladite direction d'agencement, un effet visuel dynamique supplémentaire, fonction de l'agencement desdits modules, et comprenant le mouvement d'un ou plusieurs éléments graphiques complexes, comme par exemple le croisement de deux segments de droite se « déplaçant » dans le même sens à des vitesses différentes ou dans des sens opposés, et/ou le mouvement d'un segment de droite oblique par rapport à la direction d'agencement.

Selon un ou plusieurs exemples de réalisation, l'ensemble de modules comprend un premier sous-ensemble de module et un deuxième sous-ensemble de modules, tels que les modules du premier sous-ensemble de modules permettent de simuler des éléments optiques avec au moins une région concave, les modules du deuxième sous-ensemble de modules permettent de simuler des éléments optiques avec au moins une région convexe, les modules du premier sous-ensemble sont disposés de façon alternée avec les modules du deuxième sous ensemble.

Un tel agencement des modules permet de former un composant optique de sécurité qui présente, en réflexion et sous l'effet d'un mouvement de tilt, un effet visuel dynamique original, comprenant le croisement de deux segments de droite.

Par ailleurs, en alternant les modules du premier et du deuxième sous-ensembles de modules, un observateur perçoit les effets liés à chacun des sous-ensembles simultanément.

Selon un ou plusieurs exemples de réalisation, l'ensemble de modules comprend au moins un premier sous-ensemble de modules, tel que les modules dudit premier sous-ensemble de modules permettent de simuler des éléments optiques avec, pour chacun desdits éléments optiques, au moins une première région concave ou au moins une première région convexe, chacune desdites premières régions comprenant une ligne de méplat parallèle à la direction d'agencement. Par ailleurs, pour deux modules successifs dudit premier sous-ensemble de modules, lesdites lignes de méplat sont décalées selon la direction de variation de la pente.

Une ligne de méplat est au sens de la présente description une ligne parallèle à la direction d'agencement des modules au niveau de laquelle la pente du profil de l'élément optique simulé par ledit module s'annule.

Un tel agencement des modules permet de former un composant optique de sécurité qui présente, en réflexion et sous l'effet d'un mouvement de tilt, un effet visuel dynamique original comprenant le mouvement d'un segment de droite oblique par rapport à la direction d'agencement des modules. En jouant sur le décalage de modules successifs, il sera possible de former des lignes brisées avec plusieurs segments.

Selon un ou plusieurs exemples de réalisation, pour plusieurs modules successifs dudit premier sous-ensemble de modules, lesdites lignes de méplat sont décalées selon la direction de variation de la pente d'un décalage inférieur à 300 $\mu$m, afin de présenter à un observateur un effet visuel d'une ligne qui semble continue. En jouant sur le sens et l'amplitude du décalage, par exemple avec un décalage continûment variable suivant l'axe perpendiculaire à la direction d'agencement, il est également possible de générer des courbes.

Selon un ou plusieurs exemples de réalisation, l'ensemble de modules comprend au moins un premier sous-ensemble de modules, tel que les modules dudit premier sous-ensemble de modules permettent de simuler des éléments optiques avec au moins une première région concave pour tous lesdits modules dudit premier sous-ensemble et/ou au moins une première région convexe pour tous lesdits modules dudit premier sous-ensemble et au moins deux desdits modules du premier sous-ensemble de modules permettent de simuler des éléments optiques présentant des profils avec des fonctions différentes de variation de la pente.

Un tel agencement des modules permet de former un composant optique de sécurité qui présente, en réflexion et sous l'effet d'un mouvement de tilt, un effet visuel dynamique original d'un élément graphique en mouvement se déformant.

En fonction des effets visuels recherchés, les modules de l'ensemble de modules du composant optique de sécurité selon le premier aspect peuvent être conçus pour simuler différents éléments optiques présentant au moins une région convexe et/ou au moins une région concave.

Ainsi, selon un ou plusieurs exemples de réalisation, au moins un desdits modules permet de simuler un élément optique avec un profil présentant une pente variable selon ladite direction de variation de la pente, symétrique (en valeur absolue) par rapport à une ligne de méplat parallèle à la direction d'agencement. La symétrie de la fonction de pente permet de simuler un effet de mouvement régulier du ou des élément(s) graphique(s), avec une symétrie de l'effet visuel en fonction des valeurs de tilt positif ou négatif.

Selon un ou plusieurs exemples de réalisation, au moins un desdits modules permet de simuler un élément optique avec un profil présentant une pente variable selon ladite direction de variation de la pente, dissymétrique (en valeur absolue) par rapport à une ligne de méplat, ladite ligne de méplat étant parallèle à la direction d'agencement. La dissymétrie de la fonction de pente permet de simuler des effets de changement de vitesse de part et d'autre d'une position nominale du composant (tilt nul).

Selon un ou plusieurs exemples de réalisation, au moins un desdits modules permet de simuler un élément optique avec au moins une région concave et au moins une région convexe. La présence à la fois d'au moins une région concave et d'au moins une région convexe permet de former une combinaison/pluralité d'effets visuels d'éléments graphiques en mouvement.

Selon un ou plusieurs exemples de réalisation, ladite première structure présente un contour formant une forme graphique reconnaissable.

Selon un ou plusieurs exemples de réalisation, le contour de la structure forme une forme graphique semblable à la forme d'un élément graphique en mouvement.

Lorsque le premier motif comprend au moins une deuxième structure, les structures peuvent être juxtaposées, chacune avec des formes reconnaissables.

Le composant optique de sécurité selon le premier aspect peut comprendre une ou plusieurs couches additionnelles en fonction des besoins de l'application, sans que cette ou ces couches additionnelles ne contribuent à l'effet visuel recherché.

Ainsi, selon un ou plusieurs exemples de réalisation, le composant optique de sécurité est adapté à la sécurisation d'un document ou d'un produit, et comprend en outre, sur la face opposée à la face d'observation, une couche adaptée pour le transfert du composant sur le document ou le produit, par exemple une couche adhésive ou une couche d'adhésif réactivable.

Selon un ou plusieurs exemples de réalisation, le composant optique de sécurité comprend en outre, du côté de la première face d'observation, un film support destiné à être détaché après transfert du composant sur le document ou le produit.

Selon un ou plusieurs exemples de réalisation, le composant optique de sécurité est adapté à la fabrication d'un fil de sécurité pour la sécurisation des billets de banque, et comprend du côté de la première face d'observation et/ou sur la face opposée à la première face d'observation, une ou plusieurs couches de protection.

Selon un deuxième aspect, la présente description concerne des procédés de fabrication de composants optiques de sécurité selon le premier aspect.

Ainsi, la présente description concerne un procédé de fabrication d'un composant optique de sécurité destiné à être observé en réflexion, à l'œil nu, selon au moins une première face d'observation, le procédé comprenant :

- le dépôt sur un film support d'une première couche d'un matériau présentant un premier indice de réfraction ;
- la formation sur ladite première couche d'au moins une première structure ;
- le dépôt d'une deuxième couche, recouvrant au moins en partie ladite première structure, et présentant une bande spectrale de réflexion dans le visible,

    ◦ ladite première structure est formée d' un premier motif lui-même formé d'un ensemble de modules disposés côte à côte, selon une direction d'agencement donnée, une largeur maximale de chaque module définie dans la direction d'agencement étant inférieure à 300 $\mu$m, ledit ensemble de modules comprenant un nombre minimal de modules tel qu'une dimension minimale de la première structure selon la direction d'agencement (X) est supérieure à 1 mm;

    ◦ chaque module comprend un bas-relief avec un premier ensemble de facettes dont les formes sont déterminées pour simuler un élément optique visible en réflexion, avec au moins une région convexe ou concave, présentant un profil avec une pente variable selon une seule direction, dite direction de variation de la pente, perpendiculaire à la direction d'agencement;

    ◦ ledit premier motif est modulé par un deuxième motif formant un réseau périodique de période comprise entre 100 nm et 700 nm, déterminé pour produire, après dépôt de la deuxième couche, un filtre résonant dans une bande spectrale de résonance donnée, de telle sorte que pour deux modules disposés côte à côte, la bande spectrale de résonance est différente entre lesdits deux modules.

Selon un troisième aspect, la présente description concerne des procédés d'authentification de composants optiques de sécurité selon le premier aspect.

Selon un ou plusieurs exemples de réalisation, le procédé d'authentification d'un composant optique de sécurité selon le premier aspect comprend :

- une étape d'illumination dudit composant optique de sécurité en lumière naturelle et l'observation, à travers un polariseur, d'une extinction locale de l'effet coloré ; ou

une étape d'illumination dudit composant optique de sécurité en lumière polarisée linéaire et l'observation d'une extinction locale de l'effet coloré.

## BREVE DESCRIPTION DES FIGURES

D'autres caractéristiques et avantages de l'invention apparaîtront à la lecture de la description qui suit, illustrée par les figures suivantes :

- la FIG. 1, déjà décrite, illustre un exemple de double barres déroulantes selon l'art antérieur;
- les FIGS. 2A et 2B, illustrent des vues en coupe d'exemples de réalisation de composants selon la présente description ;
- les FIGS. 3 à 5, des schémas illustrant des modules dans un composant optique de sécurité selon la présente description, avec différents profiles de pentes ;
- la FIG. 6, des schémas illustrant des formes extérieures de modules dans un composant optique de sécurité selon la présente description
- les FIGS. 7 à 10, des schémas illustrant différentes réalisations de composants optiques de sécurité selon la présente description et les effets visuels associés.

## DESCRIPTION DETAILLEE

Sur les figures, les éléments ne sont pas représentés à l'échelle pour une meilleure visibilité.

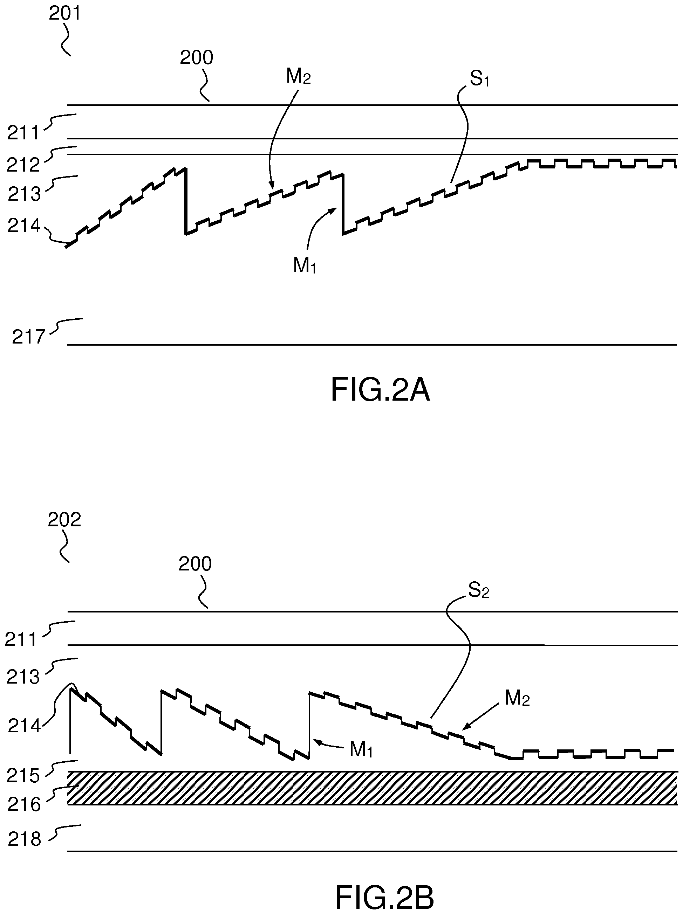

Les FIGS. 2A et 2B représentent selon des vues en coupe (partielles) deux exemples de composants optiques de sécurité selon la présente description.

Le composant optique de sécurité 201 représenté sur la FIG. 2A représente par exemple un composant optique de sécurité destiné à être transféré sur un document ou un produit en vue de sa sécurisation. Il comprend selon cet exemple un film support 211, par exemple un film en matériau polymère, par exemple un film en polyéthylène téréphtalate (PET) de quelques dizaines de micromètres, typiquement 15 à 100 $\mu m$, ainsi qu'une couche de détachement 212, par exemple en cire naturelle ou synthétique. La couche de détachement permet de retirer le film support en polymère 211 après transfert du composant optique sur le produit ou document à sécuriser. Le composant optique de sécurité 201 comprend par ailleurs une première couche 213 en matériau diélectrique, présentant un premier indice de réfraction $n_1$ et au moins une première structure diffractive $S_1$, comprenant un premier motif $M_1$, estampé sur ladite première couche 213 et qui sera décrite plus en détails par la suite.

Dans l'exemple de la FIG. 2A, le composant optique de sécurité 201 comprend également une deuxième couche 214 recouvrant au moins en partie ladite première structure $S_1$, et présentant une bande spectrale de réflexion dans le visible. La deuxième couche 214 est par exemple une couche métallique ou une couche dite de variation d'indice, présentant un indice de réfraction différent de celui des couches avoisinantes, la différence d'indice entre les couches 213 et 214 présentant une valeur au moins égale à 0,3. La couche 214 permet d'assurer la réflexion de la lumière incidente. Comme cela apparait sur la FIG.2A, la structure $S_1$ présente un premier motif $M_1$ modulé par un deuxième motif $M_2$ formant un réseau périodique sub longueur d'onde, comme cela sera décrit plus en détails par la suite.

Le composant optique de sécurité comprend par ailleurs une ou plusieurs couches non fonctionnelles optiquement mais adaptées à l'application, par exemple, dans l'exemple de la FIG. 2A, une couche d'adhésif 217, par exemple une couche d'adhésif ré-activable à chaud, pour le transfert du composant optique de sécurité sur le produit ou document.

En pratique, comme cela sera détaillé par la suite, le composant optique de sécurité peut être fabriqué en empilant les couches sur le film support 211, puis le composant est transféré sur un document/produit à sécuriser grâce à la couche d'adhésif 217. Optionnellement, le film support 211 peut alors être détaché, par exemple au moyen de la couche de détachement 212. La face principale d'observation 200 du composant optique de sécurité se trouve ainsi du côté de la première couche 213 opposé à la face gravée de la couche 213.

Le composant optique de sécurité 202 représenté sur la FIG. 2B représente par exemple un composant optique de sécurité destiné à la sécurisation de billets de banque ; il s'agit par exemple d'une partie d'un fil de sécurité destiné à être intégré dans le papier pendant la fabrication du billet. Dans cet exemple, le composant 202 comprend comme précédemment un film support 211 (12 à 25 $\mu m$) qui servira également de film de protection au fil de sécurité, et, comme dans l'exemple de la FIG. 2A, une première couche 213 en matériau diélectrique présentant un premier indice de réfraction $n_1$, au moins une première structure diffractive $S_2$, estampée sur ladite première couche 213, et une deuxième couche 214 recouvrant au moins en partie ladite première structure $S_2$, et présentant une bande spectrale de réflexion dans le visible. Comme dans l'exemple de la FIG. 2A, le premier motif $M_1$ est modulé par un deuxième motif $M_2$ formant un réseau périodique sub longueur d'onde. Le composant optique de sécurité 202 comprend par ailleurs, dans l'exemple de la FIG. 2B, un ensemble des couches 215, 216, 218, respectivement une couche d'encapsulation 215, une couche de contraste colorée opaque 216 facultative et une couche de protection 218, par exemple un deuxième film polymère ou un vernis. Comme dans l'exemple précédent, la fabrication peut être réalisée par empilement des couches sur le film support 211. La couche de protection 218 est ensuite déposée pour donner au fil de sécurité la solidité nécessaire. Les couches d'encapsulation 215 et de contraste colorée 216 sont optionnelles ; elles peuvent également ne former qu'une seule couche. La couche d'adhésif 218 et la couche 215 peuvent également ne former qu'une seule et même couche présentant les deux fonctions.

Il apparaitra à l'homme du métier que d'autres couches non fonctionnelles optiquement peuvent être ajoutées en fonction des besoins de l'application dans chacun des exemples représentés sur les FIGS. 2A et 2B et que les variantes de réalisation présentées sur les FIGS. 2A et 2B peuvent être combinées.

A noter que si les couches additionnelles, non fonctionnelles optiquement, par exemple la couche 217, ou les couches 215, 216, 218, sont transparentes, ainsi que le support de destination, le composant optique de sécurité pourra être visible des deux côtés, avec une inversion des courbures des éléments optiques générés.

Selon un ou plusieurs exemples de réalisation de la présente description, le premier motif $M_1$ comprend au moins un ensemble de modules disposés côte à côte, selon une direction d'agencement donnée, une largeur maximale de chaque module, définie dans la direction d'agencement, étant inférieure à 300 $\mu$m. Chaque module comprend un bas-relief avec un premier ensemble de facettes dont les formes sont déterminées pour simuler un élément optique visible en réflexion vu de la face d'observation 200, avec au moins une région convexe ou concave, ledit élément optique présentant un profil avec une pente variable selon une seule direction, dite direction de variation de la pente, perpendiculaire à la direction d'agencement.

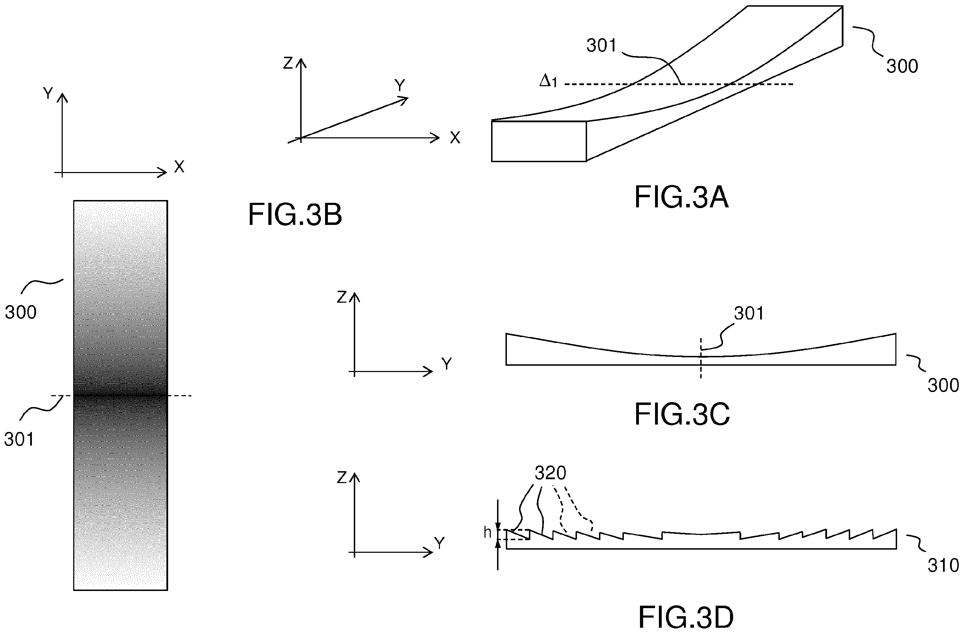

Pour la détermination de la forme du premier motif, on peut se référer à la méthode de formation des lentilles de Fresnel, comme cela est illustré au moyen des FIGS. 3 à 5 qui illustrent ainsi différents exemples de modules adaptés pour former le premier motif selon la présente description. Sur ces figures, par souci de lisibilité, la modulation du premier motif avec le deuxième motif n'est pas représentée.

Plus précisément, les FIGS. 3A à 3D illustrent un premier exemple d'un module 310, représenté en coupe sur la FIG. 3D. Le module 310 comprend un premier motif diffractif formé d'un ensemble de facettes 320 et déterminé pour simuler un élément optique visible en réflexion 300, ledit élément optique 300 étant représenté en perspective sur la FIG. 3A et en coupe sur la FIG. 3C. Comme cela apparait sur les FIGS. 3A et 3C, l'élément optique 300 présente un profil d'élévation selon l'axe Z, avec une pente variable selon une seule direction Y, dite direction de variation de la pente, les modules 310 étant destinés à être agencés selon une direction X d'agencement perpendiculaire à la direction Y de variation de la pente.

L'élément optique réflectif 300 que l'on cherche à reproduire avec le bas relief 310 est dans l'exemple des FIGS. 3A à 3D un élément optique réflectif concave, par exemple un élément réflectif cylindrique formé d'un tronçon de cylindre dont la génératrice définit une direction principale parallèle à X. Alternativement, il pourrait s'agir d'une portion d'ellipse, de parabole ou toute autre courbe symétrique. Le choix de la courbe est conduit par la variation de vitesse attendue de l'effet visuel pour une rotation en tilt donnée. L'élément optique 300 comprend une ligne de méplat 301, correspondant à la ligne d'annulation de la pente, correspondant à la ligne pour laquelle

$$\frac{dz}{dy} = 0\,;$$

la ligne de méplat est perpendiculaire à la direction de variation de la pente Y. La FIG. 3B représente une vue de dessus de l'élément optique 300 dans laquelle, par convention, les régions concaves les plus creusées sont représentées avec des gris sombres et les régions les moins creusées sont représentées avec des gris clairs.

Dans les exemples des figures 3A et 3D, l'élément optique 300 est par ailleurs symétrique par rapport à un axe longitudinal (noté $\Delta_1$), ici confondu avec la ligne de méplat 301.

L'agencement de modules tels que ceux représentés sur la FIG. 3D et permettant de former des éléments optiques symétriques, permet d'obtenir une symétrie de l'effet observé pour des angles de tilt positifs ou négatifs.

Bien entendu, une description similaire à celle réalisée au moyen des FIGS. 3A à 3D dans le cas d'un élément réflectif concave peut être faite pour un élément réflectif convexe.

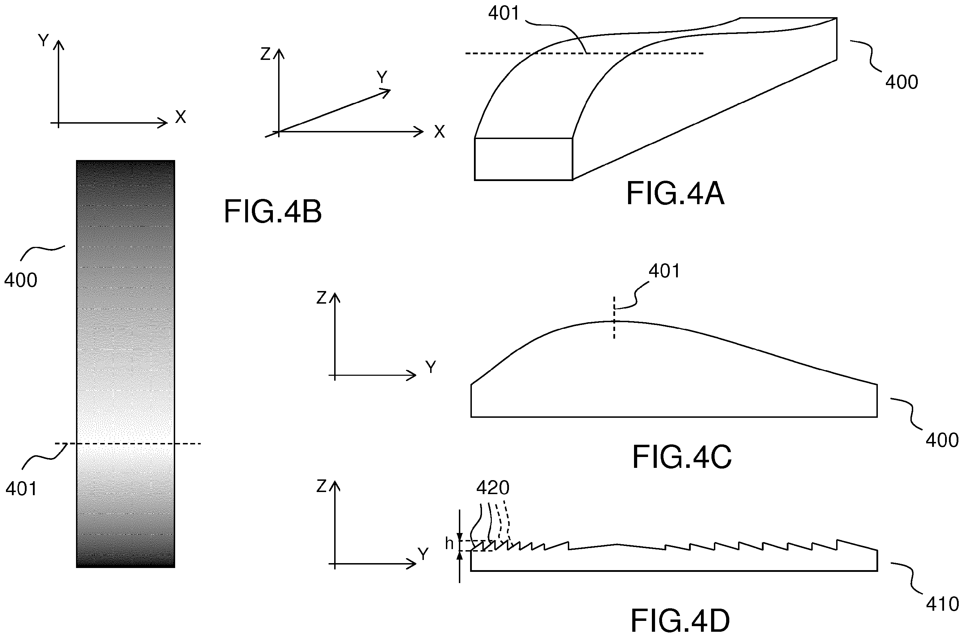

Les FIGS. 4A à 4D illustrent un deuxième exemple d'un module 410, représenté en coupe sur la FIG. 4D. Le module 410 comprend un premier motif diffractif formé d'un ensemble de facettes 420 et déterminé pour simuler un élément optique visible en réflexion 400, ledit élément optique 400 étant représenté en perspective sur la FIG. 4A et en coupe sur la FIG. 4C. Comme cela apparait sur les FIGS. 4A et 4C, l'élément optique 400 présente un profil d'élévation en Z avec pente variable selon une seule direction Y, dite direction de variation de la pente, les modules 410 étant destinés à être agencés selon une direction X d'agencement perpendiculaire à la direction Y de variation de la pente.

L'élément optique réflectif 400 que l'on cherche à reproduire avec le bas relief 410 est dans l'exemple des FIGS. 4A à 4D un élément optique réflectif avec une région convexe, présentant comme dans l'exemple précédent une ligne de méplat 401 correspondant à la ligne d'annulation de la pente. Dans cet exemple cependant, l'élément optique 400 n'est par symétrique par rapport la ligne de méplat 401. La FIG. 4B représente une vue de dessus de l'élément optique 400 dans laquelle, par convention, les régions convexes les plus élevées sont représentées avec des gris plus clairs et les régions les moins élevées sont représentées avec des gris plus sombres.

L'agencement de modules tels que ceux représentés sur la FIG. 4D permet d'obtenir une dissymétrie de l'effet observé pour des angles de tilt positifs ou négatifs.

Là aussi, une description similaire à celle réalisée au moyen des FIGS. 4A à 4D dans le cas d'un élément réflectif convexe peut être faite pour un élément réflectif concave.

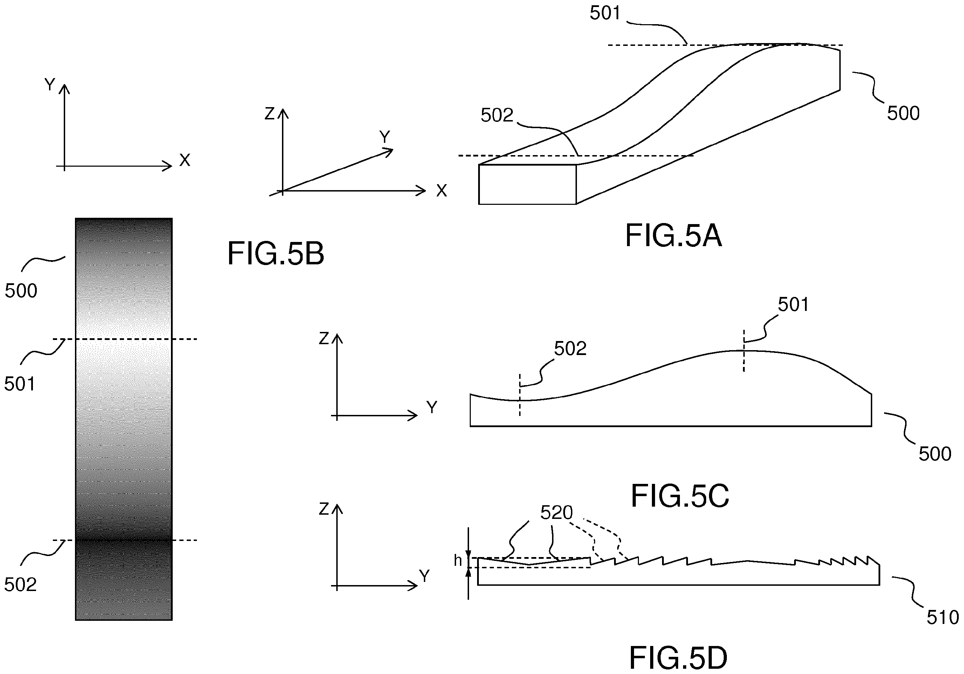

Les FIGS. 5A à 5D illustrent un troisième exemple d'un module 510, représenté en coupe sur la FIG. 5D. Le module 510 comprend un premier motif diffractif formé d'un ensemble de facettes 520 et déterminé pour simuler un élément optique visible en réflexion 500, ledit élément optique 500 étant représenté en perspective sur la FIG. 5A et en coupe sur la FIG. 5C. Comme cela apparait sur les FIGS. 5A et 5C, l'élément optique 500 présente un profil avec une pente variable selon la direction Y de variation de la pente, les modules 510 étant destinés à être agencés selon une direction X d'agencement perpendiculaire à la direction Y de variation de la pente.

L'élément optique réflectif 500 que l'on cherche à reproduire avec le bas-relief 510 est dans l'exemple des FIGS. 5A à 5D un élément optique réflectif avec une première région convexe, présentant une ligne de méplat 501 correspondant à la ligne d'annulation de la pente de la région convexe et une première région concave, présentant une ligne de méplat 502 correspondant à la ligne d'annulation de la pente de la région concave. La FIG. 5B représente une vue de dessus de l'élément optique 500 dans laquelle, comme précédemment, les régions les plus élevées sont représentées avec des gris plus clairs et les régions les plus creusées sont représentées avec des gris plus sombres.

L'agencement de modules tels que ceux représentés sur la FIG. 5D permet d'obtenir, pour un angle de tilt $-\theta_{max}$, 2 segments lumineux qui apparaissent et se déplacent en direction opposée quand l'angle de tilt se referme, puis fusionnent pour un angle de tilt maximum $+\theta_{max}$.

La détermination de l'ensemble des facettes diffractives pour obtenir un élément optique réflectif avec au moins une région convexe et/ou au moins une région concave, tel qu'illustré par exemple sur les FIGS. 3 à 5, peut être faite par des moyens connus, décrits par exemple dans la demande WO2011138394 au nom de la déposante.

Il est possible par exemple de procéder à un maillage de l'élément optique à pas constant, par exemple selon un ensemble de plans équidistants, parallèle au plan XZ représenté sur les FIGS. 3 à 5. La forme du premier motif peut alors être obtenue en translatant dans chaque maille les surfaces élémentaires de l'élément réflectif pour obtenir un premier motif en forme de bas relief d'épaisseur réduite dont les facettes reproduisent la forme des surfaces élémentaires. Il est également possible d'effectuer le maillage à niveau constant sous la forme d'un tranchage, par exemple selon un ensemble de plans équidistants, parallèle au plan XY représenté sur les FIGS. 3 à 5. Comme précédemment, la forme du premier motif peut être obtenue en translatant les surfaces élémentaires de l'élément réflectif pour obtenir un premier motif en forme de bas relief d'épaisseur réduite dont les facettes reproduisent la forme des surfaces élémentaires. Un tel mode de réalisation est particulièrement intéressant dans le cadre d'une réplication par embossage car il limite les variations d'épaisseur du premier motif résultant.

De manière générale, on peut choisir l'une des deux approches ou bien combiner les deux approches pour former une structure diffractive avec des pas et hauteurs des facettes déterminés pour simuler un élément optique visible en réflexion avec au moins une région concave et/ou au moins une région convexe. Les pas et hauteurs des facettes (320, 420, 520) sont déterminés selon les lois de la diffraction, dans l'hypothèse d'une structure diffractive sur laquelle est déposée la première couche en matériau diélectrique d'indice de réfraction $n_1$. Les pas sont compris entre 2 μm et 300 μm, de préférence entre 3 μm et 100 μm, de préférence entre 4 et 50 μm. les hauteurs sont déterminées pour favoriser une pluralité d'ordres de diffraction afin de conserver une diffraction achromatique. Par exemple, la hauteur h des facettes du premier motif est généralement comprise entre 0.1 et 10 microns de préférence entre 0.3 et 5 μm. Chaque facette peut être assimilée à un rectangle et présente une grande dimension correspondant à la largeur du module et une petite dimension, mesurée sur la facette dans une direction perpendiculaire à la grande dimension, la petite dimension étant comprise entre 2 et 20 μm, préférentiellement entre 4 et 10 μm. Un module peut comprendre quelques dizaines à quelques milliers de facettes pour former la structure diffractive.

Bien que les modules formant le premier motif d'un composant optique de sécurité selon la présente description, illustrés sur les FIGS. 3 à 5, présentent une forme dans le plan XY sensiblement rectangulaire, d'autres formes sont possibles.

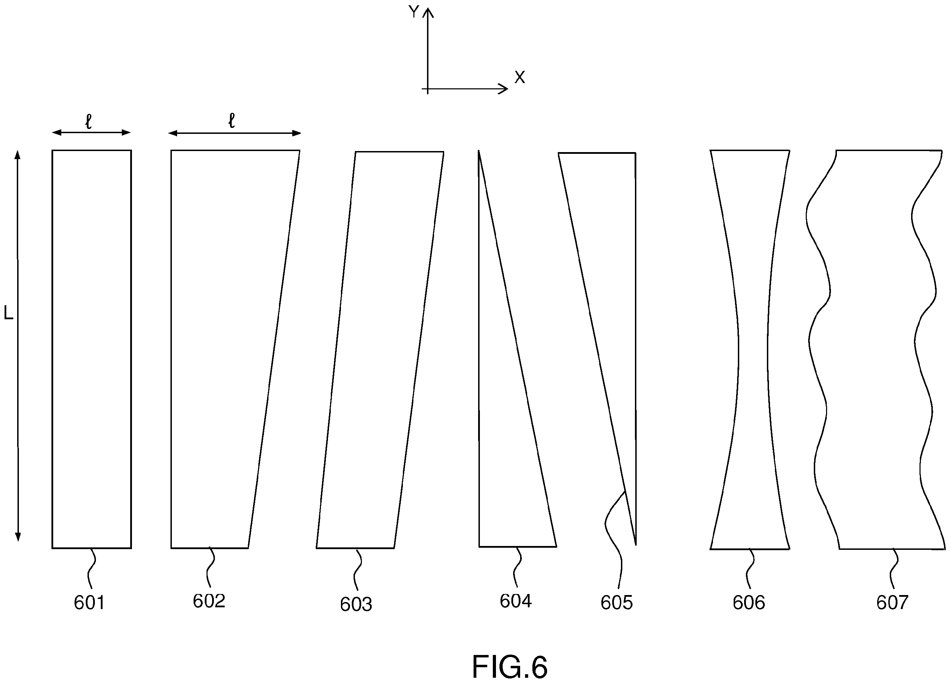

La FIG. 6 représente ainsi différentes formes, référencées 601 à 607 de modules selon la présente description, les modules étant représentés de dessus, c'est-à-dire dans un plan XY défini respectivement par les directions d'agencement X et de variation de la pente Y.

Par exemple, des modules de formes pyramidales inversées (par exemple 604, 605) peuvent permettre de créer des effets visuels de fondu enchaîné. Des modules de forme complexe (606, 607) peuvent permettre une authentification additionnelle au microscope.

On peut définir pour chacun de ces modules une plus grande dimension L et une largeur ℓ qui peut être variable (cas des formes 602 à 606). Dans tous les cas cependant, une valeur maximale ℓ de la largeur est inférieure à 300 μm. Pour un module rectangulaire, on choisira de préférence 10 μm < ℓ < 300 μm, de préférence 30 μm < ℓ < 100 μm. Pour L, on choisira de préférence 2 mm < L < 50 mm, de préférence 5 mm < L < 20 mm. La longueur finale de chacun des modules peut être déterminée par la pupille graphique.

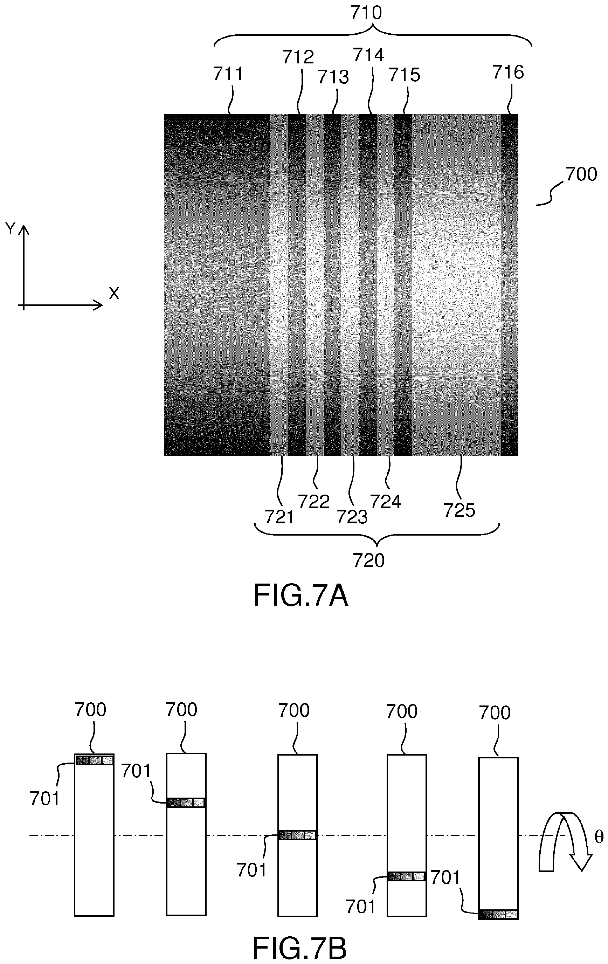

Des exemples non limitatifs d'effets visuels dynamiques colorés sont maintenant illustrés au moyen des FIGS. 7 à 10.

Sur les FIGS. 7A, 8A, 9A, 10A, par souci de simplification, seul un ensemble de quelques modules a été représenté pour chaque composant optique de sécurité, vus de dessus et avec la convention prise pour leur représentation (voir FIGS. 3B, 4B, 5B) selon laquelle les régions concaves les plus creuses sont représentées avec des gris sombres et les régions convexes les plus élevées sont représentées avec des gris clairs. En pratique, un premier motif pourra comprendre un nombre de modules plus important que celui représenté. Les FIGS. 7B, 8B, 9B, 10B, illustrent l'effet visuel résultant lorsque le composant optique de sécurité est observé en réflexion et sous l'effet d'un mouvement de tilt (angle $\theta$) autour d'un axe parallèle à ladite direction d'agencement.

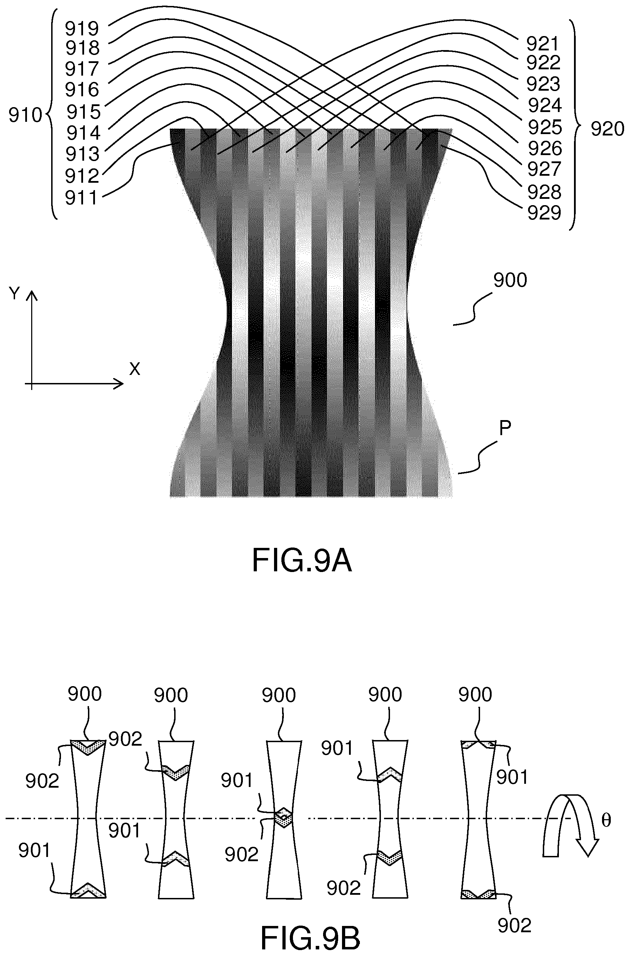

Sur les figures 7A, 8A, 9A, 10A, la structure est « pupillée », c'est-à-dire qu'elle est délimitée par un contour de forme sensiblement rectangulaire sur les FIGS 7A, 8A, 10A de telle sorte que sur le composant optique de sécurité, l'effet visuel soit visible sur une région sensiblement rectangulaire (voir FIGS. 7B, 8B, 9B, 10B). Sur la FIG. 9A, la structure est également pupillée, mais avec une autre forme. Le « pupillage » s'obtient lors de la fabrication du composant optique de sécurité par exemple par application d'un filtre numérique sur les données informatiques de gravure pour supprimer les informations de gravure au-delà de la pupille souhaitée, ou par une pupille physique qui s'intercale lors de l'enregistrement optique entre le faisceau incident de gravure et la surface photosensible.

Ces figures, représentées à des fins illustratives pour montrer des effets visuels, ne sont pas représentées à l'échelle et sont simplifiées par rapport à une observation réelle d'un composant. Par ailleurs, les effets visuels représentés sur chacune des figures peuvent être combinés. Lorsque les modules sont représentés convexes, des effets de déplacement dans un sens opposé peuvent être obtenus avec des modules concaves, et inversement.

Pour obtenir des effets visuels colorés, les composants optiques de sécurité peuvent comprendre, comme cela est illustré sur les FIGS. 2A et 2B, le premier motif $M_1$ modulé par un deuxième motif $M_2$ formant un réseau périodique de période comprise entre 100 nm et 700 nm, avantageusement entre 200 nm et 500 nm, et qui se comporte dans le visible comme un réseau dit « sub longueur d'onde » c'est-à-dire de période inférieure à la plus petite longueur d'onde utilisée pour observer le composant. Le réseau est déterminé pour produire, après dépôt de la deuxième couche 214 réfléchissante dans le visible, un filtre résonant dans une première bande spectrale.

Selon un premier exemple de réalisation, la deuxième couche 214 peut comprendre une couche en matériau diélectrique d'indice de réfraction $n_2$, encapsulée entre la première couche 213 en matériau diélectrique d'indice de réfraction $n_1$ et une troisième couche en matériau diélectrique 215 d'indice de réfraction $n_3$; le filtre résonant est un filtre soustractif en longueur d'onde, appelé dans la suite de la description « filtre résonant soustractif diélectrique ». Un exemple d'un tel filtre est par exemple le DID™ (pour « Diffractive Identitification Device »), fabriqué par la déposante. Le deuxième motif forme un réseau sub longueur d'onde, à une ou deux dimensions, adapté pour permettre l'excitation de modes guidés au sein de la deuxième couche 214, formant un filtre résonant passe bande en réflexion, dont la bande spectrale de résonance $\Delta\lambda$ est centrée sur une première longueur d'onde $\lambda_1$. La deuxième couche 214 comprend une couche mince, d'épaisseur préférentiellement comprise entre 20 nm et 200 nm et préférentiellement entre 60 nm et 150 nm, présentant un deuxième indice de réfraction $n_2$ tel que le deuxième indice de réfaction $n_2$ diffère du premier indice de réfraction $n_1$ et du troisième indice de réfraction $n_3$ d'au moins 0,3, avantageusement d'au moins 0,5. Selon un ou plusieurs exemples de réalisation, ladite couche mince en matériau diélectrique est une couche en matériau dit « haut indice » de réfraction (ou « HRI » pour « High Refractive Index »), présentant un indice de réfraction compris entre 1,8 et 2,9, avantageusement entre 2,0 et 2,4 et les première et troisième couches en matériau diélectrique, de part et d'autre de la deuxième couche, sont des couches dites « bas indice » de réfraction, présentant des indices de réfraction compris entre 1,3 et 1,8, avantageusement entre 1,4 et 1,7.

Selon un deuxième exemple de réalisation, la deuxième couche 212 comprend une couche mince en matériau métallique, par exemple de l'argent ou de l'aluminium, avantageusement d'épaisseur supérieure à 40 nm. Le deuxième motif $M_2$ forme un réseau sub longueur d'onde, à une ou deux dimensions, adapté pour permettre la formation d'un filtre résonant coupe-bande en réflexion. Il s'agit d'un filtre plasmonique en réflexion, appelé « R'plasmon » dans la présente description, et tel que décrit par exemple dans la demande brevet FR 2982038A1. Avantageusement, la deuxième couche métallique 22 est suffisamment épaisse pour présenter une transmission maximale résiduelle en fonction de la longueur d'onde de 2%.

Les exemples décrits au moyen des FIGS. 7 à 10 peuvent comprendre une structure de type filtre résonant soustractif diélectrique ou de type R'Plasmon par exemple. Dans le cas d'une structure de type filtre résonant soustractif diélectrique, le composant optique de sécurité présentera un effet visuel supplémentaire, à savoir un changement de couleur lors d'une rotation azimutale du composant, dans le cas où le réseau formant le deuxième motif est à une dimension. Avantageusement, le composant optique comportera au moins 2 zones dont les réseaux sub-longueur d'onde sont respectivement orientés suivant les axes X et Y. Le contrôle d'authenticité du filtre résonant soustractif diélectrique consiste alors à vérifier la permutation entre les 2 couleurs et/ou une extinction de couleur si on illumine le composant en lumière polarisée ou si on observe le composant à travers un polariseur.

Les FIGS. 7A et 7B illustrent un premier exemple d'un composant optique de sécurité 700 selon la présente description, avec effet visuel dynamique coloré.

Dans cet exemple, l'ensemble de modules comprend un premier sous-ensemble 710 de modules 711 - 716 permettant de simuler des éléments optiques avec au moins une région convexe, les lignes de méplat étant sensiblement alignées, et un deuxième sous-ensemble 720 de modules 721 - 725 permettant également de simuler des éléments optiques avec au moins une région convexe, les lignes de méplat étant sensiblement alignées sur celles des modules du premier sous-ensemble 710. Dans cet exemple, le premier motif de chaque module du premier sous ensemble de modules 710 est modulé par un deuxième motif adapté pour former une première couleur, par exemple le rouge, et le premier motif de chaque module du deuxième sous ensemble de modules 720 est modulé par un deuxième motif adapté pour former une deuxième couleur, par exemple le vert. Les couleurs sont obtenues par exemple par des effets filtre résonant soustractif diélectrique ou R'Plasmon tels que décrits ci-dessus. En particuliers cet effet peut être obtenu en utilisant un même réseau sub-longueur d'onde de modulation dont les directions sont orientées perpendiculairement. Comme cela est visible sur la FIG. 7A, les modules du premier sous-ensemble sont arrangés de façon alternée avec les modules du deuxième sous ensemble ; les modules du premier sous-ensemble 710 sont plus larges que ceux du deuxième sous-ensemble 720 dans une première région tandis que c'est le contraire dans une deuxième région. Dans une troisième région centrale, les largeurs des modules des deux sous-ensembles sont sensiblement identiques.

Comme illustré sur la FIG. 7B, le composant optique présente alors en réflexion et sous l'effet d'un mouvement de tilt, un effet visuel dynamique coloré comprenant le déplacement d'une ligne colorée 701, comprenant plusieurs couleurs correspondant aux différentes régions, qui se déplace ici sans se déformer car les modules sont tous identiques. A noter que la couleur de la région centrale est une couleur composée, dans cet exemple jaune, qui résulte d'une synthèse additive entre les couleurs des modules des deux sous-ensembles.

Selon un ou plusieurs exemples de réalisation d'un composant optique de sécurité de la présente description, pour deux modules disposés côte à côte, la pente selon au moins une ligne parallèle à la direction d'agencement X est différente entre lesdits deux modules. La déposante a montré qu'un tel composant optique de sécurité présente, en réflexion et sous l'effet d'un mouvement de tilt autour d'un axe parallèle à ladite direction d'agencement, un effet visuel dynamique comprenant le croisement de deux segments de droite et/ou le mouvement d'un segment de droite oblique, en fonction de l'agencement desdits modules.

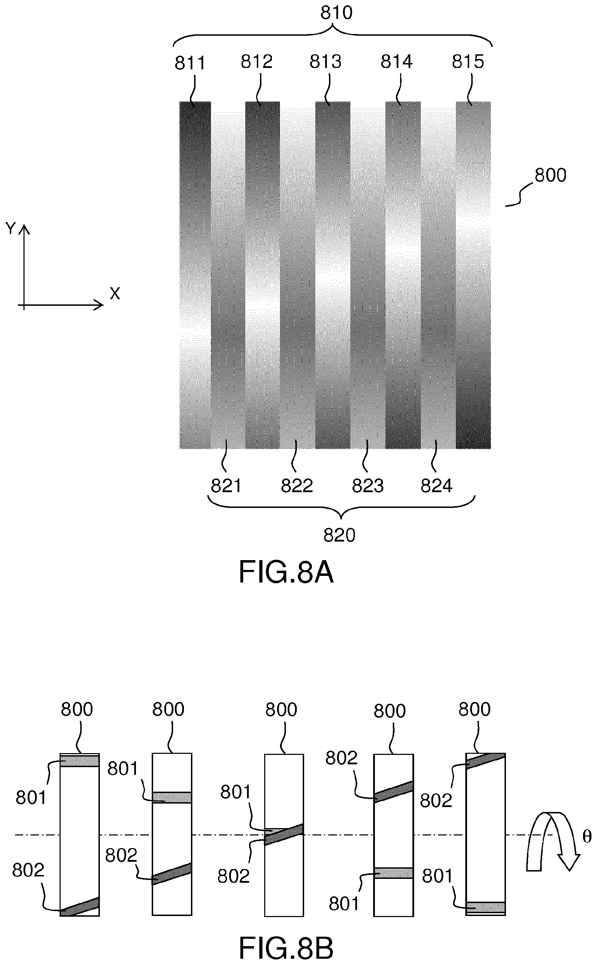

Les FIGS. 8A et 8B illustrent un deuxième exemple d'un composant optique de sécurité 800 selon la présente description, avec effet visuel dynamique coloré.

Comme précédemment, l'ensemble de modules comprend un premier sous-ensemble 810 de modules 811 - 815 permettant de simuler des éléments optiques avec au moins une région convexe, les lignes de méplat étant décalées dans cet exemple, et un deuxième sous-ensemble 820 de modules 821 - 824 permettant de simuler des éléments optiques avec au moins une région concave, les lignes de méplat étant sensiblement alignées. Comme précédemment, le premier motif de chaque module du premier sous ensemble de modules 810 est modulé par un deuxième motif adapté pour former une première couleur, par exemple le rouge, et le premier motif de chaque module du deuxième sous ensemble de modules 820 est modulé par un deuxième motif adapté pour former une deuxième couleur, par exemple le vert. Les couleurs sont obtenues par exemple par des effets d'un filtre résonant soustractif diélectrique ou R'Plasmon tels que décrits ci-dessus. Comme cela est visible sur la FIG. 8A, les modules du premier sous-ensemble sont arrangés de façon alternée avec les modules du deuxième sous ensemble ; dans cet exemple, 1 tous les modules présentent une largeur sensiblement identique.

Comme illustré sur la FIG. 8B, le composant optique présente alors en réflexion et sous l'effet d'un mouvement de tilt, un effet visuel dynamique coloré comprenant le déplacement dans un sens d'une ligne colorée 801 (ici une ligne verte), et le déplacement en sens inverse d'une ligne colorée oblique 802 (ici une ligne rouge). Pour un angle de tilt nul, les 2 barres se superposent et les couleurs fusionnent comme précédemment.

Les FIGS. 9A et 9B illustrent un troisième exemple d'un composant optique de sécurité 900 selon la présente description.

Dans cet exemple, l'ensemble de modules comprend un premier sous-ensemble 910 de modules 911 - 919 permettant de simuler des éléments optiques avec au moins une région convexe, tels que pour deux modules successifs du premier sous-ensemble de modules, les lignes de méplat sont décalées selon la direction (Y) de variation de la pente pour former un premier élément graphique, dans cet exemple un chevron avec une pointe vers le haut. L'ensemble des modules comprend par ailleurs un deuxième sous-ensemble 920 de modules 921 - 929 permettant de simuler des éléments optiques avec au moins une région concave, les lignes de méplat des modules étant décalées selon la direction (Y) de variation de la pente pour former un deuxième élément graphique, dans cet exemple un chevron avec une pointe vers le bas. Dans cet exemple, la structure est « pupillée » avec une pupille P qui rappelle elle-même la forme des chevrons. Par ailleurs, le premier motif de chaque module du premier sous ensemble de modules 910 est modulé par un deuxième motif adapté pour former une première couleur, par exemple le rouge, et le premier motif de chaque module du deuxième sous ensemble de modules 920 est modulé par un deuxième motif adapté pour former une deuxième couleur, par exemple le vert. Des couleurs différentes peuvent être obtenues par des effets d'un filtre résonant soustractif diélectrique ou R'Plasmon tels que décrits ci-dessus. Comme cela est visible sur la FIG. 9A, les modules du premier sous-ensemble sont arrangés de façon alternée avec les modules du deuxième sous ensemble ; dans cet exemple, tous les modules présentent une largeur sensiblement identique.

Comme illustré sur la FIG. 9B, le composant optique présente alors en réflexion et sous l'effet d'un mouvement de tilt, un effet visuel dynamique comprenant le déplacement dans un sens d'un du premier élément graphique 901, de la première couleur, par exemple rouge, et le déplacement dans un sens opposé du deuxième élément graphique 902, de la deuxième couleur, par exemple vert.

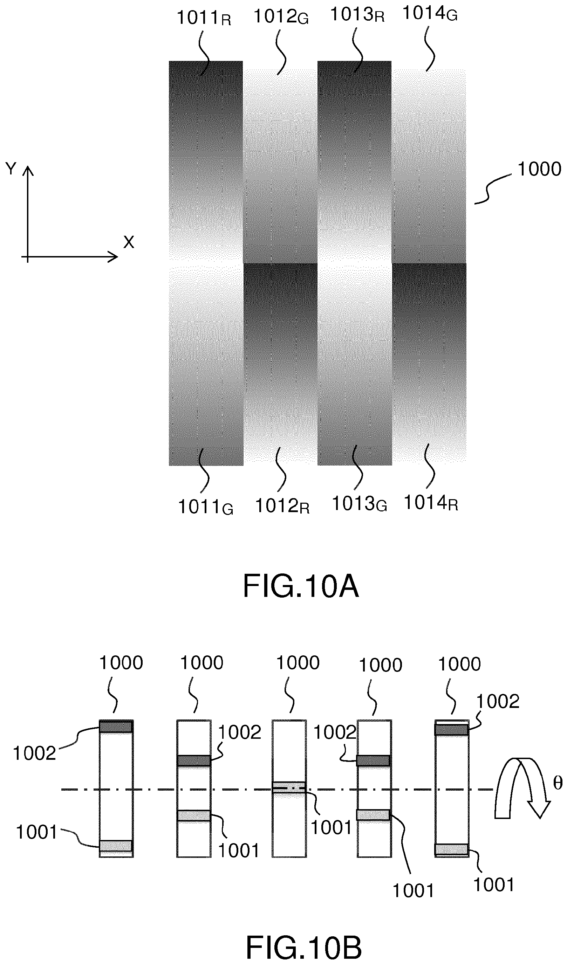

Les FIGS. 10A et 10B illustrent un quatrième exemple d'un composant optique de sécurité 1000 selon la présente description, avec effet visuel dynamique coloré.

Dans cet exemple, l'ensemble de modules comprend un premier sous-ensemble de modules 1011, 1013 permettant de simuler des éléments optiques avec au moins une région convexe, les lignes de méplat étant sensiblement alignées, et un deuxième sous-ensemble de modules 1012, 1014 permettant de simuler des éléments optiques avec au moins une région concave, les lignes de méplat étant sensiblement alignées sur celles des modules du premier sous-ensemble. Comme cela est visible sur la FIG. 10A, les modules du premier sous-ensemble sont arrangés de façon alternée avec les modules du deuxième sous ensemble. Dans cet exemple, le premier motif de chaque module du premier sous-ensemble de modules est modulé par un deuxième motif adapté pour former dans une première région une première couleur (région indiquée par l'indice G), par exemple le vert, et dans une deuxième région une deuxième couleur (région indiquée par l'indice R), par exemple le rouge. Par ailleurs, le premier motif de chaque module du deuxième sous ensemble de modules est modulé par un deuxième motif adapté pour former dans une première région une première couleur (région G), par exemple le vert, et dans une deuxième région une deuxième couleur (région R), par exemple le rouge. Dans cet exemple, comme cela apparaît sur la FIG. 10A, les deux régions permettant de former sur chaque module les deux couleurs sont séparées par les lignes de méplat et les première et deuxième couleurs sont inversées entre deux modules consécutifs respectivement des premier et deuxième sous-ensembles. Des couleurs différentes peuvent être obtenues par exemple par des effets filtre résonant soustractif diélectrique ou R'Plasmon tels que décrits ci-dessus. En particuliers cet effet peut être obtenu en utilisant un même réseau sub-longueur d'onde de modulation dont les directions sont orientées perpendiculairement.

Comme illustré sur la FIG. 10B, le composant optique présente alors en réflexion et sous l'effet d'un mouvement de tilt, un effet visuel dynamique coloré comprenant le déplacement d'une première ligne colorée 1001 de la première couleur (verte) dans un premier sens puis dans un deuxième sens ainsi que le déplacement d'une deuxième ligne colorée 1002 de la deuxième couleur (rouge) dans des sens opposés à ceux de la première ligne colorée 1001. A noter que la couleur sur la ligne de méplat est une couleur composée, dans cet exemple jaune, qui résulte d'une synthèse additive entre les première et deuxième couleurs.

Le procédé de fabrication de composants optiques de sécurité selon la présente description comprend avantageusement les étapes suivantes.

La structure optique ($S_1$ ou $S_2$) formée du premier motif éventuellement modulé par le second motif, est enregistrée par photolithographie ou lithographie par faisceau d'électrons sur un support photosensible (ou « photorésist » selon l'expression anglo-saxonne). Une étape de galvanoplastie permet de reporter la structure optique dans un matériau résistant par exemple à base de Nickel pour réaliser une matrice ou « master » métallique comportant la structure optique. La fabrication du composant optique de sécurité comprend alors une étape de réplication. Par exemple la réplication peut être réalisée par estampage (par pressage à chaud du matériau diélectrique en anglais « hot embossing ») de la première couche 213 (FIGS. 2A, 2B) en matériau diélectrique d'indice de réfraction $n_1$, par exemple une couche de bas indice, typiquement un vernis d'estampage de quelques microns d'épaisseur. La couche 213 est avantageusement portée par le film support 211, par exemple un film de 12 $\mu$m à 100 $\mu$m en matériau polymère, par exemple en PET (polyéthylène téréphtalate). La réplication peut également être faite par moulage de la couche de vernis d'estampage avant séchage puis réticulation UV («UV casting »). La réplication par réticulation UV permet notamment de reproduire des structures présentant une grande amplitude de profondeur et permet d'obtenir une meilleure fidélité dans la réplication. De manière générale, toute autre méthode de réplication de haute résolution connue de l'art antérieur peut être utilisée dans l'étape de réplication. Vient ensuite le dépôt sur la couche ainsi embossée de l'ensemble des autres couches, par exemple la couche réfléchissante 214, la couche d'encapsulation 215 (optionnelle), la couche de contraste colorée opaque 216 (optionnelle) qui peut être déposée uniformément ou imprimée pour figurer un nouveau motif et la couche de type colle ou vernis (217, 218) par un procédé d'enduction ou un vernis réticulable sous UV, par exemple.

Bien que décrit à travers un certain nombre d'exemples de réalisation, le composant optique de sécurité selon l'invention et le procédé de fabrication dudit composant comprennent différentes variantes, modifications et perfectionnements qui apparaîtront de façon évidente à l'homme de l'art, étant entendu que ces différentes variantes, modifications et perfectionnements font partie de la portée de l'invention telle que définie par les revendications qui suivent.

## Revendications

**1.** Composant optique de sécurité destiné à être observé en réflexion, à l'œil nu, selon au moins une première face d'observation, comprenant :

- une première couche en matériau diélectrique, présentant un premier indice de réfraction ($n_1$);
- une première structure (S) diffractive gravée sur ladite première couche ;
- une deuxième couche, recouvrant au moins en partie ladite première structure, et présentant une bande spectrale de réflexion dans le visible;

et dans lequel :

- ladite première structure est formée d'un premier motif, ledit premier motif étant formé d'un ensemble de modules disposés côte à côte, selon une direction (X) d'agencement donnée;
- chaque module comprend un bas-relief avec un premier ensemble de facettes dont les formes sont déterminées pour simuler un élément optique visible en réflexion, avec au moins une région convexe et/ou au moins une région concave, présentant un profil avec une pente variable selon une seule direction (Y), dite direction de variation de la pente, perpendiculaire à la direction d'agencement (X); **caractérisé en ce que** :

- la largeur maximale, définie dans la direction d'agencement (X), de chaque module de l'ensemble de modules formant ledit premier motif de ladite première structure est inférieure à 300 $\mu$m, ledit ensemble de modules comprenant un nombre minimal de modules tel qu'une dimension minimale de la première structure selon la direction d'agencement (X) est supérieure à 1 mm; et **en ce que**
- ledit premier motif est modulé par un deuxième motif formant un réseau périodique de période comprise entre 100 nm et 700 nm, déterminé pour produire, après dépôt de la deuxième couche, un filtre résonant dans une bande spectrale de résonance donnée, de telle sorte que pour deux modules disposés côte à côte, la bande spectrale de résonance est différente entre lesdits deux modules.

**2.** Composant optique de sécurité selon la revendication 1, comprenant en outre:

- une troisième couche en matériau diélectrique déposée sur ladite deuxième couche et présentant un troisième indice de réfraction ($n_3$);

et dans lequel:

- la deuxième couche est une couche mince en matériau diélectrique, présentant un deuxième indice de réfraction ($n_2$) tel que la différence entre le deuxième indice de réfraction ($n_2$) et le premier indice de réfraction ($n_1$) et la différence entre le deuxième indice de réfraction ($n_2$) et le troisième indice de réfraction ($n_3$) sont supérieures ou égales à 0,3;
- le deuxième motif est adapté pour produire, après dépôt de la deuxième couche et encapsulation de ladite première structure par la troisième couche, un filtre résonant passe bande en réflexion.

**3.** Composant optique de sécurité selon la revendication 1, dans lequel:

- la deuxième couche est une couche mince en matériau métallique, d'épaisseur supérieure à 40 nm;
- le deuxième motif est adapté pour produire un filtre résonant coupe-bande en réflexion.

**4.** Composant optique de sécurité selon l'une quelconque des revendications précédentes, dans lequel pour deux modules disposés côte à côte, la pente selon au moins une ligne parallèle à la direction (X) d'agencement est différente entre lesdits deux modules, le composant optique présentant en réflexion et sous l'effet d'un mouvement de tilt, un effet visuel dynamique comprenant le mouvement d'un ou plusieurs éléments graphiques.

**5.** Composant optique de sécurité selon la revendication 4, dans lequel l'ensemble de modules comprend un premier sous-ensemble de module et un deuxième sous-ensemble de modules, tels que :

- les modules du premier sous-ensemble de modules permettent de simuler des éléments optiques avec au moins une région concave ;
- les modules du deuxième sous-ensemble de modules permettent de simuler des éléments optiques avec au moins une région convexe ;
- les modules du premier sous-ensemble sont disposés de façon alternée avec les modules du deuxième sous ensemble ;

le composant optique présentant en réflexion et sous l'effet d'un mouvement de tilt, un effet visuel dynamique comprenant le croisement de deux segments de droite.

**6.** Composant optique selon l'une quelconque des revendications 4 ou 5, dans lequel l'ensemble de modules comprend au moins un premier sous-ensemble de modules, tel que :

- les modules dudit premier sous-ensemble de modules permettent de simuler des éléments optiques avec, pour chacun desdits éléments optiques, au moins une première région concave ou au moins une première région convexe, chacune desdites premières régions comprenant une ligne de méplat parallèle à la direction d'agencement;
- pour deux modules successifs dudit premier sous-ensemble de modules, lesdites lignes de méplat sont décalées selon la direction (Y) de variation de la pente;

le composant optique présentant en réflexion et sous l'effet d'un mouvement de tilt, un effet visuel dynamique comprenant le mouvement d'un segment de droite oblique.

7. Composant optique selon l'une quelconque des revendications 4 à 6, dans lequel l'ensemble de modules comprend au moins un premier sous-ensemble de modules, tel que :

- les modules dudit premier sous-ensemble de modules permettent de simuler des éléments optiques avec au moins une première région concave pour tous lesdits modules dudit premier sous-ensemble ou convexe pour tous lesdits modules dudit premier sous-ensemble;
- au moins deux desdits modules du premier sous-ensemble de modules présentent des profils avec des fonctions de variation de la pente différentes;

le composant optique présentant en réflexion et sous l'effet d'un mouvement de tilt, un effet visuel dynamique d'un élément graphique en mouvement se déformant.

8. Composant optique de sécurité selon l'une quelconque des revendications précédentes, dans lequel au moins un desdits modules permet de simuler un élément optique présentant un profil avec une pente variable selon ladite direction (Y) de variation de la pente, la pente étant symétrique en valeur absolue par rapport à une ligne de méplat parallèle à la direction (X) d'agencement.

9. Composant optique de sécurité selon l'une quelconque des revendications précédentes, dans lequel au moins un desdits modules permet de simuler un élément optique présentant un profil avec une pente variable selon ladite direction (Y) de variation de la pente, la pente étant dissymétrique en valeur absolue par rapport à une ligne de méplat pour laquelle la pente s'annule.

10. Composant optique de sécurité selon l'une quelconque des revendications précédentes, dans lequel au moins un desdits modules permet de simuler un élément optique avec au moins une région concave et au moins une région convexe.

11. Composant optique de sécurité selon l'une quelconque des revendications précédentes, dans lequel lesdits modules de l'ensemble de modules ont chacun une largeur sensiblement constante selon ladite direction (Y) de variation de la pente, au moins deux desdits modules présentant une largeur différente.

12. Composant optique de sécurité selon l'une quelconque des revendications 1 à 10, dans lequel au moins un desdits modules présente une largeur variable selon ladite direction (Y) de variation de la pente.

13. Composant optique de sécurité selon l'une quelconque des revendications précédentes, dans lequel ladite première structure (S) présente un contour formant une forme graphique reconnaissable.

14. Procédé de fabrication d'un composant optique de sécurité destiné à être observé en réflexion, à l'œil nu, selon une face d'observation, le procédé comprenant :

- le dépôt sur un film support d'une première couche d'un matériau présentant un premier indice de réfraction ($n_1$) ;
- la formation sur ladite première couche d'au moins une première structure diffractive (S),
- le dépôt d'une deuxième couche, recouvrant au moins en partie ladite première structure, et présentant une bande spectrale de réflexion dans le visible,

  ∘ ladite première structure diffractive est formée d'un premier motif, ledit premier motif étant formé d'un ensemble de modules disposés côte à côte, selon une direction (X) d'agencement donnée;
  ∘ chaque module comprend un bas-relief avec un premier ensemble de facettes dont les formes sont déterminées pour simuler un élément optique visible en réflexion, avec au moins une région convexe et/ou au moins une région concave, présentant un profil avec une pente variable selon une seule direction (Y), dite direction de variation de la pente, perpendiculaire à la direction d'agencement (X); **caractérisé en ce que** :

  - la largeur maximale, définie dans la direction d'agencement (X), de chaque module de l'ensemble de modules formant ledit premier motif de ladite première structure est inférieure à 300 µm, ledit ensemble de modules comprenant un nombre minimal de modules tel qu'une dimension minimale de la première structure selon la direction d'agencement (X) est supérieure à 1 mm; et **en ce que**

○ ledit premier motif est modulé par un deuxième motif formant un réseau périodique de période comprise entre 100 nm et 700 nm, déterminé pour produire, après dépôt de la deuxième couche, un filtre résonant dans une bande spectrale de résonance donnée, de telle sorte que pour deux modules disposés côte à côte, la bande spectrale de résonance est différente entre lesdits deux modules.

15. Procédé d'authentification d'un composant optique de sécurité selon l'une quelconque des revendications 1 à 13 comprenant :

- une étape d'illumination dudit composant optique de sécurité en lumière naturelle et l'observation, à travers un polariseur, d'une extinction locale de l'effet coloré ; ou
- une étape d'illumination dudit composant optique de sécurité en lumière polarisée linéaire et l'observation d'une extinction locale de l'effet coloré.

**Patentansprüche**

1. Optische Sicherheitskomponente, welche geeignet ist, mit dem bloßen Auge von mindestens einer Beobachtungsseite in Reflektion sichtbar zu sein, umfassend:

- eine erste Schicht aus dielektrischem Material mit einem ersten Brechungsindex ($n_1$);
- eine erste Beugungsstruktur (S), welche auf die erste Schicht geätzt ist;
- eine zweite Schicht, welche die erste Struktur wenigstens teilweise bedeckt und ein Reflektionsspektralband im Sichtbaren hat;

und wobei:

- die erste Struktur aus einem ersten Muster gebildet ist, wobei das erste Muster aus einer Gruppe von Modulen gebildet ist, welche in einer gegebenen Anordnungsrichtung (X) Seite an Seite angeordnet sind;

- jedes Modul ein Flachrelief mit einer ersten Gruppe von Facetten, deren Formen dazu konfiguriert sind, ein in Reflektion sichtbares optisches Element zu simulieren, mit mindestens einem konvexen Bereich und/oder mindestens einem konkaven Bereich, mit einem Profil mit einer Steigung, die sich in einer einzigen Richtung (Y), die Richtung der Änderung der Steigung genannt wird, ändert und senkrecht zu der Anordnungsrichtung (X) ist, umfasst;

**dadurch gekennzeichnet, dass**:

- die in der Anordnungsrichtung (X) definierte maximale Länge jedes Moduls der Gruppe von Modulen, welche das erste Muster der ersten Struktur bilden, kleiner als 300 µm ist, wobei die Gruppe von Modulen wenigstens so viele Module umfasst, dass eine minimale Größe der ersten Struktur in der Anordnungsrichtung (X) größer als 1 mm ist; und dass
- das erste Muster durch ein zweites Muster moduliert ist, wodurch ein periodisches Gitter gebildet ist, dessen Periode zwischen 100 nm und 700 nm liegt und welches konfiguriert ist, nach dem Auftragen der zweiten Schicht einen resonanten Filter in einem gegebenen resonanten Spektralband derart zu erzeugen, dass für zwei Seite an Seite angeordnete Module das resonante Spektralband zwischen den zwei Modulen verschieden ist.

2. Optische Sicherheitskomponente nach Anspruch 1, ferner umfassend:

- eine dritte Schicht aus dielektrischem Material, welche auf der zweiten Schicht angeordnet ist und einen dritten Brechungsindex ($n_3$) hat;

und wobei:

- die zweite Schicht eine dünne Schicht aus dielektrischem Material mit einem zweiten Brechungsindex (n2) ist, wobei die Differenz zwischen dem zweiten Brechungsindex (n2) und dem ersten Brechungsindex ($n_1$) und die Differenz zwischen dem zweiten Brechungsindex (n2) und dem dritten Brechungsindex ($n_3$) größer oder gleich 0,3 sind;
- das zweite Muster dazu geeignet ist, nach dem Auftragen der zweiten Schicht und der Kapselung der ersten Struktur durch die dritte Schicht einen resonanten Bandpassfilter in Reflektion zu bilden.

3. Optische Sicherheitskomponente nach Anspruch 1, wobei:

- die zweite Schicht eine dünne Schicht aus metallischem Material mit einer Dicke größer 40 nm ist;

- das zweite Muster dazu geeignet ist, einen resonanten Stoppbandfilter in Reflektion zu bilden.

4. Optische Sicherheitskomponente nach einem der vorangehenden Ansprüche, wobei für zwei Seite an Seite angeordnete Module die Steigung entlang mindestens einer zu der Anordnungsrichtung (X) parallelen Linie zwischen den zwei Modulen verschieden ist, wobei die optische Komponente in Reflektion und durch die Wirkung einer Kippbewegung eine dynamische visuelle Wirkung hat, welche die Bewegung eines oder mehrerer grafischer Elemente umfasst.

5. Optische Sicherheitskomponente nach Anspruch 4, wobei die Gruppe von Modulen eine erste Untergruppe von Modulen und eine zweite Untergruppe von Modulen umfasst, wobei:

   - die Module der ersten Untergruppe von Modulen das Simulieren von optischen Elementen mit mindestens einem konkaven Bereich ermöglichen;
   - die Module der zweiten Untergruppe von Modulen das Simulieren von optischen Elementen mit mindestens einem konvexen Bereich ermöglichen;
   - die Module der ersten Untergruppe abwechselnd mit den Modulen der zweiten Untergruppe angeordnet sind;

   wobei die optische Komponente in Reflektion und durch die Wirkung einer Kippbewegung eine dynamische visuelle Wirkung hat, welche das Kreuzen von zwei geraden Segmenten umfasst.

6. Optische Komponente nach einem der Ansprüche 4 oder 5, wobei die Gruppe von Modulen mindestens eine erste Untergruppe von Modulen umfasst, wobei:

   - die Module der ersten Untergruppe von Modulen das Simulieren von optischen Elementen mit, für jedes der optischen Elemente, mindestens einem ersten konkaven Bereich oder mindestens einem ersten konvexen Bereich ermöglichen, wobei jeder der ersten Bereiche eine zu der Anordnungsrichtung parallele flache Linie hat;
   - für zwei aufeinanderfolgende Module der ersten Untergruppe von Modulen die flachen Linien in der Richtung (Y) der Änderung der Steigung versetzt sind;

   wobei die optische Komponente in Reflektion und durch die Wirkung einer Kippbewegung eine dynamische visuelle Wirkung hat, welche das Bewegen eines schrägen geraden Segments umfasst.

7. Optische Komponente nach einem Ansprüche 4 bis 6, wobei die Gruppe von Modulen mindestens eine erste Untergruppe von Modulen umfasst, wobei:

   - die Module der ersten Untergruppe von Modulen das Simulieren von optischen Elementen mit mindestens einem ersten Bereich ermöglichen, der für alle Module der ersten Untergruppe konkav ist oder der für alle Module der ersten Untergruppe konvex ist;
   - mindestens zwei der Module der ersten Untergruppe von Modulen Profile mit unterschiedlichen Steigungsänderungsfunktionen haben;

   wobei die optische Komponente in Reflektion und durch die Wirkung einer Kippbewegung eine dynamische visuelle Wirkung hat, dass sich ein bewegtes graphisches Element verformt.

8. Optische Sicherheitskomponente nach einem der vorangehenden Ansprüche, wobei mindestens eines der Module das Simulieren eines optischen Elements ermöglicht, welches ein Profil mit einer Steigung hat, die sich in der Richtung (Y) der Änderung der Steigung ändert, wobei die Steigung symmetrisch im Absolutwert bezüglich einer zu der Anordnungsrichtung (X) parallelen flachen Linie ist.

9. Optische Sicherheitskomponente nach einem der vorangehenden Ansprüche, wobei mindestens eines der Module das Simulieren eines optischen Elements ermöglicht, welches ein Profil mit einer Steigung hat, die sich in der Richtung (Y) der Änderung der Steigung ändert, wobei die Steigung unsymmetrisch im Absolutwert bezüglich einer flachen Linie ist, für welche sich die Steigung aufhebt.

10. Optische Sicherheitskomponente nach einem der vorangehenden Ansprüche, wobei mindestens eines der Module das Simulieren eines optischen Elements mit mindestens einem konkaven Bereich und mindestens einem konvexen Bereich ermöglicht.

11. Optische Sicherheitskomponente nach einem der vorangehenden Ansprüche, wobei die Module der Gruppe von Modulen jeweils eine im Wesentlichen konstante Breite in der Richtung (Y) der Änderung der Steigung haben, wobei mindestens zwei der Module eine unterschiedliche Breite haben.

12. Optische Sicherheitskomponente nach einem Ansprüche 1 bis 10, wobei mindestens eines der Module eine Breite hat, die sich in der Richtung (Y) der Änderung der Steigung ändert.

**13.** Optische Sicherheitskomponente nach einem der vorangehenden Ansprüche, wobei die erste Struktur (S) eine Kontur hat, die eine erkennbare grafische Form bildet.

**14.** Verfahren zum Herstellen einer optischen Sicherheitskomponente, welche geeignet ist, mit dem bloßen Auge von einer Beobachtungsseite in Reflexion sichtbar zu sein, wobei das Verfahren umfasst:

   - Auftragen einer ersten Schicht aus einem Material mit einem ersten Brechungsindex ($n_1$) auf einen Trägerfilm;
   - Bilden mindestens einer ersten Beugungsstruktur (S) auf der ersten Schicht,
   - Auftragen einer zweiten Schicht, welche die erste Struktur wenigstens teilweise bedeckt und ein Reflektionsspektralband im Sichtbaren hat,

      ∘ wobei die erste Beugungsstruktur aus einem ersten Muster gebildet ist, wobei das erste Muster aus einer Gruppe von Modulen gebildet ist, welche in einer gegebenen Anordnungsrichtung (X) Seite an Seite angeordnet sind;
      ∘ jedes Modul ein Flachrelief mit einer ersten Gruppe von Facetten, deren Formen dazu konfiguriert sind, ein in Reflektion sichtbares optisches Element zu simulieren, mit mindestens einem konvexen Bereich und/oder mindestens einem konkaven Bereich, mit einem Profil mit einer Steigung, die sich in einer einzigen Richtung (Y), die Richtung der Änderung der Steigung genannt wird, ändert und senkrecht zu der Anordnungsrichtung (X) ist, umfasst;

   dadurch charakterisiert, dass:

   - die in der Anordnungsrichtung (X) definierte maximale Länge jedes Moduls der Gruppe von Modulen, welche das erste Muster der ersten Struktur bilden, kleiner als 300 µm ist, wobei die Gruppe von Modulen wenigstens so viele Module umfasst, dass eine minimale Größe der ersten Struktur in der Anordnungsrichtung (X) größer als 1 mm ist; und dass

      ∘ das erste Muster durch ein zweites Muster moduliert ist, wodurch ein periodisches Gitter gebildet ist, dessen Periode zwischen 100 nm und 700 nm liegt und welches konfiguriert ist, nach dem Auftragen der zweiten Schicht einen resonanten Filter in einem gegebenen resonanten Spektralband derart zu erzeugen, dass für zwei Seite an Seite angeordnete Module das resonante Spektralband zwischen den zwei Modulen verschieden ist.

**15.** Verfahren zur Authentifizierung einer optischen Sicherheitskomponente nach einem der Ansprüche 1 bis 13, umfassend:

   - einen Schritt des Beleuchtens der optischen Sicherheitskomponente mit natürlichem Licht und des Beobachtens, durch einen Polarisator, einer lokalen Extinktion der Farbwirkung; oder
   - einen Schritt des Beleuchtens der optischen Sicherheitskomponente mit linear polarisiertem Licht und des Beobachtens einer lokalen Extinktion der Farbwirkung.

## Claims

**1.** An optical security component intended to be observed in reflection, with the naked eye, according to at least one first observation face, comprising:

   - a first layer made of dielectric material, having a first refractive index ($n_1$);
   - a first diffractive structure (S) etched on said first layer;
   - a second layer, covering at least part of said first structure, and having a spectral band of reflection in the visible spectrum;

   and in which:

   - said first diffractive structure is formed by a first pattern, said first pattern being formed by a set of modules disposed side-by-side, in a given direction (X) of arrangement;
   - each module comprises a bas-relief with a first set of facets whose forms are determined to simulate an optical element visible in reflection, with at least one convex region and/or at least one concave region, having a profile with a variable slope in a single direction (Y), called direction of variation of the slope, perpendicular to the direction of arrangement (X);

   **characterized in that**:

   - the maximum width, defined in the direction of arrangement (X), of each module of the set of modules forming said first pattern of said first structure is less than 300 µm, said set of modules comprising a minimum number of modules such that a minimum dimension of the first structure along the direction of arrangement (X) is greater than 1 mm; and **in that**
   - said first pattern is modulated by a second pattern forming a periodic grating of period lying between 100 nm and 700 nm, determined to produce, after deposition of the second layer, a resonant filter in a given spectral resonance band, such that when the two modules are places side by side, the spectral resonance band is different between said two modules.

2. The optical security component as claimed in claim 1, further comprising:

- A third layer made of dielectric material deposited on said second layer and having a third refractive index ($n_3$);

and in which:

- the second layer is a thin layer made of dielectric material, having a second refractive index ($n2$) such that the difference between the second refractive index ($n2$) and the first refractive index ($n_1$) and the difference between the second refractive index ($n2$) and the third refractive index ($n_3$) are greater than or equal to 0,3;
- the second pattern is adapted to produce, after deposition of the second layer and encapsulation of said first structure by the third layer, a bandpass resonant filter in reflection.

3. The optical security component as claimed in claim 1, in which:

- the second layer is a thin layer made of metal material, of thickness greater than 40 nm;
- the second pattern is adapted to produce a band stop resonant filter in reflection.

4. The optical security component as claimed in either one of the preceding claims, in which for two modules disposed side-by-side the slope along at least one line parallel to the direction (X) of arrangement is different between said two modules, the optical component having, in reflection and under the effect of a tilt movement, a dynamic visual effect comprising the movement of one or more graphic elements.

5. The optical security component as claimed in claim 4, in which the set of modules comprises a first subset of modules and a second subset of modules, such that:

- the modules of the first subset of modules make it possible to simulate optical elements with at least a concave region;
- the modules of the second subset of modules make it possible to simulate optical elements with at least a convex region;
- the modules of the first subset of modules are arranged alternately with the modules of the second subset;

the optical component having, in reflection and under the effect of a tilt movement, a dynamic visual effect comprising the intersection of two line segments.

6. The optical component as claimed in either one of claims 4 or 5, in which the set of modules comprises at least one first subset of modules, such that:

- the modules of said first subset of modules make it possible to simulate optical elements with, for each of said optical elements, at least one first concave region or at least one first convex region, each of said first regions comprising a flat line parallel to the direction of arrangement;
- for two successive modules of said first subset of modules, said flat lines are staggered in the direction (Y) of variation of the slope;

the optical component having, in reflection and under the effect of a tilt movement, a dynamic visual effect comprising the movement of an oblique straight segment.

7. The optical component as claimed in any one of claims 4 to 6, in which the set of modules comprises at least one first subset of modules, such that:

- the modules of said first subset of modules make it possible to simulate optical elements with at least one first region that is concave for all said modules of said first subset or convex for all said modules of said first subset;
- at least two of said modules of the first subset of modules have profiles with different slope variation functions;

the optical component having, in reflection and under the effect of a tilt movement, a dynamic visual effect of a moving graphic element being deformed.

8. The optical security component as claimed in any one of the preceding claims, in which at least one of said modules makes it possible to simulate an optical element having a profile with a variable slope in said direction (Y) of variation of the slope, the slope being symmetrical in absolute value relative to a flat line parallel to the direction (X) of arrangement.

9. The optical security component as claimed in any one of the preceding claims, in which at least one of said modules makes it possible to simulate an optical element having a profile with a variable slope in said direction (Y) of variation of the slope, the slope being dissymmetrical in absolute value relative to a flat line for which the slope is canceled.

10. The optical security component as claimed in any one of the preceding claims, in which at least one of said modules makes it possible to simulate an optical element with at least one concave region and at least one convex region.

11. The optical security component as claimed in any one of the preceding claims, in which said modules of the set of modules each have a width that is substantially constant in said direction (Y) of variation of the slope, at least two of said modules having a different width.

12. The optical security component as claimed in any one of claims 1 to 10, in which at least one of said modules has a width that is variable in said direction (Y) of variation of the slope.

13. The optical security component as claimed in any one of the preceding claims, in which said first structure (S) has an outline forming a recognizable graphic form.

14. A method for fabricating an optical security component intended to be observed in reflection, with the naked eye, according to an observation face, the method comprising:

> - the deposition on a support film of a first layer of a material having a first refractive index ($n_1$);
> - the formation on said first layer of at least one first diffractive structure (S),
> - the deposit of a second layer, covering at least part of said first structure, and having a spectral band of reflection in the visible spectrum,
>
> > ∘ said first diffractive structure is formed by a first pattern, said first pattern being formed by a set of modules arranged side by side, along a given direction (X) of arrangement;
> > ∘ each module comprises a bas-relief with a first set of facets whose forms are determined to simulate a visible optical element in reflection, with at least one convex region and/or at least one concave region, having a profile with a variable slope in a single direction (Y), called direction of variation of the slope, perpendicular to the direction of arrangement (X);

**characterized in that**:

> - the maximum width, defined in the direction of arrangement (X), of each module of the set of modules forming said first pattern of said first structure is less than 300 μm, said set of modules comprising a minimum number of modules such that a minimum dimension of the first structure along the direction of arrangement (X) is greater than 1 mm; and **in that**

> - said first pattern is modulated by a second pattern forming a periodic grating of period lying between 100 nm and 700 nm, determined to produce, after deposition of the second layer, a resonant filter in a given spectral resonance band, such that when the two modules are places side by side, the spectral resonance band is different between said two modules.

15. A method for authenticating an optical security component as claimed in any one of claims 1 to 13 comprising:

> - a step of illumination of said optical security component in natural light and the observation, through a polarizer, of a local extinction of the colored effect; or
> - a step of illumination of said optical security component in linear polarized light and the observation of a local extinction of the colored effect.

(ART ANTERIEUR)

FIG.1

FIG.2A

FIG.2B

FIG.3A

FIG.3B

FIG.3C

FIG.3D

FIG.4A

FIG.4B

FIG.4C

FIG.4D

FIG.5A

FIG.5B

FIG.5C

FIG.5D

FIG.6

EP 3 634 771 B1

710

711   712   714   715   716
      713

Y

X

700

721   722   723   724   725

720

FIG.7A

700   700   700   700   700

701   701        701

701        701        701

θ

FIG.7B

810

811    812    813    814    815

800

Y

X

821    822    823    824

820

FIG.8A

800    800    800    800    800

801    801    802    801    802

801    801    802    801    θ
802    802    802    801

FIG.8B

FIG.9A

FIG.9B

FIG.10A

FIG.10B

**EP 3 634 771 B1**

## RÉFÉRENCES CITÉES DANS LA DESCRIPTION

**Documents brevets cités dans la description**

- WO 2015154943 A
- WO 2011138394 A

- FR 2982038 A1